# EUROPEAN PATENT APPLICATION

(11) **EP 0 548 767 A1**
(43) Date of publication of application: **30.06.1993**
(21) Application number: 92121364.1
(22) Date of filing: 16.12.1992
(51) Int. Cl.: C08K 3/36, C08L 27/06

(54) **Silica-containing polyvinylchloride compositions with high surface tension**

(30) Priority: 20.12.1991 US 811202
(71) Applicant: The Geon Company, Cleveland, Ohio 44131 (US)
(72) Inventor: Mertzel, Elaine Audrey, Rocky River, Ohio 44116 (US); Adams, Susan Kathleen, Bay Village, Ohio 44140 (US)
(74) Representative: von Kreisler, Alek, Dipl.-Chem.

(57) **Abstract**

The subject invention relates to polyvinyl chloride compositions having high surface tension. These compositions comprise polyvinyl chloride resin and a silica. These compositions are essentially free of low molecular weight lubricants.

## Description

### Field of The Invention

The subject invention relates to polyvinyl chloride compositions which have high surface tension. This provides improved wetting of the surface by paints, inks or adhesives thereby improving bonding.

Polyvinyl chloride (PVC) has enjoyed a great deal of commercial success as a material which can form useful articles. The ease at which it can be molded, extruded, calendered or formed and its low cost have contributed to this success. These thermoplastic polymers are resistant to chemicals and moisture. They can be formed into rigid articles, or with the addition of a plasticizer into flexible articles. Examples of specific uses are in piping and conduits, gaskets, electrical insulation, containers and wire and cable jackets.

Improved bonding of paints, adhesives and/or inks can be achieved by increasing the surface polarity or surface irregularity of a substrate. This increase in polarity will increase the surface tension and an increase in irregularity will increase the area available for mechanical interlocking. For good wetting of a surface, the surface tension of the substrate should be greater than the surface tension of the material being applied. One advantage of increasing the surface tension of a compound is the widening of the range of materials which could be employed. Use of different paints, adhesives, inks or stains could give improved aging without an increase in cost. Increasing the surface tension of the PVC would improve the potential for bonding between materials which currently are incompatible.

Typically to improve bonding of PVC to another material requires pretreatment of the surface. Elimination of the pretreatment step in the fabrication of articles would be beneficial.

An object of this invention is to make a polyvinyl chloride composition which can be easily formed into articles and has high surface tension. It is a further object to make a polyvinyl chloride composition or articles therefrom which are easily wetted by paints, inks, adhesives, or stains.

### Summary of the Invention

The subject invention relates to polyvinyl chloride compositions having high surface tension. These compositions comprise polyvinyl chloride resin and a silica. These compositions are essentially free of low molecular weight lubricants. The lubricants generally have a molecular weight (MW) less than 5000. While it may be possible to employ low levels of lubricants, *i.e*., less than about 0.5 parts, it is perferred that the lubricants be eliminated.

The compositions will have from about 0.05 parts to about 30 parts by weight of silica per 100 parts by weight of PVC. A preferred composition will have from about 0.1 parts to about 20 parts by weight per 100 parts by weight of PVC. The most preferred compositions will have from about 0.25 parts to about 10 parts by weight per 100 parts by weight of PVC.

The compositions of the subject invention will have a surface tension greater than 40 dynes/cm (mN/m). The preferred compositions of the subject invention will have a surface tension greater than 45 dynes/cm. The most preferred compositions of the subject invention will have a surface tension greater than 50 dynes/cm.

Polyvinyl chloride, PVC, vinyl polymer, or vinyl polymer material, as used herein, refers to homopolymers and copolymers of vinyl halides and vinylidene halides and includes post halogenated vinyl halides such as CPVC. Examples of these vinyl halides and vinylidene halides are vinyl chloride, vinyl bromide, vinylidene chloride and the like. The vinyl halides and vinylidene halides may be copolymerized with each other or each with one or more polymerizable olefinic monomers having at least one terminal CH₂=C< grouping. As examples of such olefinic monomers there may be mentioned the α,β-olefinically unsaturated carboxylic acids, such as acrylic acid, methacrylic acid, ethacrylic acid, α-cyanoacrylic acid, and the like; esters of acrylic acid, such as methyl acrylate, ethyl acrylate, butyl acrylate, octyl acrylate, cyanoethyl acrylate, hydroxyethyl acrylate, 2(2-ethoxyethoxy)ethyl acrylate, 2-ethylhexyl acrylate, stearyl acrylate and the like; esters of methacrylic acid, such as methyl methacrylate, butyl methacrylate, hydroxyethyl methacrylate, and the like; nitriles, such as acrylonitrile, methacrylonitrile, and the like; acrylamides, such as methyl acrylamide, N-methylol acrylamide, N-butyoxy methacrylamide, and the like; vinyl ethers, such as ethyl vinyl ether, chloroethyl vinyl ether, and the like; the vinyl ketones; styrene and styrene derivatives, such as α-methyl styrene, vinyl toluene, chlorostyrene, and the like; vinyl esters like vinyl acetate, vinyl stearate and the like; vinyl naphthalene, allyl and vinyl chloroacetate, vinyl pyridine, methyl vinyl ketone; the diolefins, including butadiene, isoprene, chloroprene, and the like; and other polymerizable olefinic monomers of the types known to those skilled in the art.

The present invention is particularly applicable to homopolymers and copolymers made by the polymerization of vinyl chloride or vinylidene chloride alone or in admixture with one or more polymerizable olefinic monomers copolymerizable therewith in amounts up to about 20% by weight, based on the weight of the monomer mixtures. The preferred copolymerizable monomers are esters of acrylic acid. The most preferred copolymerizable monomer are butyl and ethyl acrylate. The most preferred vinyl polymer, or resin, is polyvinyl chloride (PVC) homopolymer produced by the mass or suspension polymerization process and the invention, for simplicity and convenience, will be described in connection therewith, it being understood that this merely intended in an illustrative sense and not limitative.

The term silica as defined herein refers to precipitated silicas, silica gels, metallic silicates, pyrogenic or fumed silicas and the like. These have the general formulae: SiO₂, Mₙ(SiO₃)ₓ.

The values of n and x can vary with the oxidation state of the metal associated with the SiO₃ ion. The values n and x are usually integers from about 1 to about 4. The silica material could be agglomerated, i.e., several metal ions which are shared by a corresponding number of SiO₃ ions and the formulas presented above are only meant as general formulas.

Precipitated silicas and silica gels are classified as wet process silicas to differentiate them from the thermally processed pyrogenic silicas. They are usually produced by the reaction of an aqueous alkali silicate solution with a mineral acid solution, *e.g.;*

Na₂SiO₃ + H₂SO₄ → Na₂SO₄ + SiO₂↓ + H₂O

Precipitation can be conducted in three general ways, based on the order of addition of the reactants:
1. Alkali silicate solution added to acid solution
2. Acid solution added to alkali silicate solution
3. Simultaneous addition of alkali silicate and acid solutions into water or neutral salt solution
The first of these processes is the preferred method for producing silica gels. These products are characterized by very small primary particle sizes and high surface areas in the range 200 to 800 m²/g. These physical properties and their relatively high cost promote their use in many applications also served by the pyrogenic silicas. These applications in PVC include: (1) prevention of plateout, (2) antiblocking of film, (3) flow control aid for resin powders, (4) viscosity control agent, (5) processing aid, and (6) selective adsorbent and moisture removal agent.

Precipitated silicas are generally produced by precipitation procedure 2 or 3 above. Simultaneous addition is generally the preferred technique, allowing variation and control of pH, precipitation time, temperature, and electrolyte concentration to produce a range of precipitated silica products.

Precipitated silicas offer a range of property improvements in PVC. In a formula simulating a PVC floor covering, advantages reported included (1) increased hardness, (2) improved elasticity, (3) increased resistance to heat distortion, and (4) improved scratch resistance. They are also used in vinyl plastics as release agents to smooth out calendered sheets.

Precipitated metallic silicates are produced by a process very similar to that described for precipitated silicas. In the case of metallic silicates, the aqueous alkali silicate is reacted with a solution of a metal salt instead of a mineral acid. For example:

Na₂SiO₃ + CaCl₂ → CaSiO₃ + 2NaCl

The most important metallic silicates still in use are calcium silicate, basic lead silicate, aluminum silicate, and barium silicate.

Metallic silicates have been added to vinyl formulations for a wide variety of reasons. Advantages reported for their use include (1) improved electrical resistivity, (2) modified rheological properties, (3) improved hand and drape characteristics in vinyl fabrics, (4) prevention of plateout, (5) optical extension of TiO₂ in opaque PVC formulations, and (6) processing improvements in dry-blend extrusion operations.

Pyrogenic silicas, also referred to as fumed silicas, comprise a very special class of functional silica fillers. The special properties of pyrogenic silicas result primarily from the unique manufacturing process, first practiced by Degussa in 1942, in which silicon tetrachloride is hydrolyzed in an oxygen-hydrogen flame.

In terms of physical properties, pyrogenic silicas are characterized by (1) exceptionally small discrete particle sizes ranging from 7 to 16 nm (0.007 to 0.016 µm) with attendant surface areas of 120 to 380 m²/g, (2) low moisture levels, generally less than 1.5%, (3) acidic pH values in the range 3.6 to 4.3, (4) extremely high chemical purity, generally > 99.8% SiO₂ on an ignited basis, and (5)very low bulk densities, ranging from 50 to 100 g/l.

The use of silica in the compositions of the subject invention will allow the lowering or elimination of traditional external and internal lubricants. Lubricants are normally used in PVC compositions to improve processing. They are normally materials which are relatively incompatible with the PVC polymer and come to the surface in processing equipment so as to lubricate the surface of the polymer next to the metal processing equipment. Examples of lubricants include stearic acid, calcium stearate, paraffin waxes, mineral oil and the like. The thixotropic nature of the silica compounds allows the resin compounds to be processed without employing the lubricants which are usually required for PVC processing. Of course small amounts of lubricants could be employed in the compositions of this invention, but it is prefered that they be absent from the composition. Even small amounts of low molecular weight lubricants are believed to interfere with adhesion.

The compositions of the subject invention have good adhesion properties. Adhesion is measured with the Standard Method For Measuring Adhesion by Tape Test, ASTM D 3359, incorporated herein by reference. The adhesion test employed is method B. This requires making a lattice pattern with either six or eleven cuts in each direction in the film to the substrate. Pressure-sensitive tape is applied over the lattice and then removed. The adhesion can be evaluated by comparison to the published standards. The compositions of this invention were prepared and painted with several types of paint. A composition which exhibits good adhesion will have a 4b or 5b rating on the ASTM 3359 test scale. All compositions of the subject invention passed this test.

Surface tension of the PVC compositions was determined by employing standardized test inks. These inks were obtained from Softal of America Inc.. Surface tension is reported in dynes/cm (mN/m). The test procedure is based on the wetting of a film or substrate formed from the composition by reference ink solutions.

The referenced ink solution is applied to the surface to be tested with a brush. If the solution forms drops in less than 2 seconds, an ink with a lower surface tension is applied. If the edges of the test solution remain unchanged for longer than 2 seconds then an ink with a higher surface tension should be tested. When the edges of the applied test ink remain unchanged for 2 seconds the value of the surface tension of the test ink on the bottle then matches the surface tension of the material being tested. The units of surface tension are dynes/cm (mN/m).

The present invention also contemplates articles formed from these novel compositions. These articles can be formed by any process well known in the art. Examples of types of articles which can be formed include automobile components such as steering wheel covers, dashboards, consoles, body side molding and bumpers; construction profiles such as windows and door frames, gutters, drains and roof coping, soffit, facia, siding, louvers and dampers; water vessels, including large bottles and the like; fluid handling equipment, tubing, valves, housings and the like; panels for entry and garage doors, siding, capstock, furniture, office partitions, cabinets and the like; heating and air conditioning componetry, like panel and vent work; ceiling gridwork and tiles; appliance and business equipment housings and consoles; refrigerator and freezer doors and liners; road signage, barriers and traffic cones; bulkhead, fencing and railing systems; sanitary cones; bulkhead, fencing and railing systems; sanitary wares; capstock, window coverings, shutters or other trim pieces. The improved wetting of the surfaces of these compositions of the subject invention will allow articles to be painted without requiring any pretreatment, *i.e.,* sanding or roughening or washing with solvents, etc. Any type paint could be employed, *i.e.,* latex or water based paints as well as oil and solvent based paints. The preferred paints are water based or latex paints. Also, the compositions of the subject invention can be printed with various inks.

When making paintable house siding, the siding will preferably be extruded at a temperature of from about 380°F to about 410°F. The siding may be extruded as one piece with the above composition or it may be co-extruded as a two piece extrusion having a bottom or base layer and a top or cap layer. In a two piece extrusion the bottom layer could be a conventional rigid PVC composition while the top or cap layer must be the paintable PVC composition. The cap layer is normally much thinner than the base layer. For example, in a house siding the base layer could be about 0.035 inches thick and the top layer could be about 0.010 inches thick.

The subject invention also contemplates a process for the preparation of high surface tension PVC which comprises the addition of silica to the PVC composition.

Various reinforcing and non-reinforcing conventional additives can be utilized in the compositions of the present invention. Thus, heat stabilizers, impact modifiers, fire retardants, antioxidants, UV inhibitors, and processing aids generally employed for use in polymers, specifically in PVC can be implemented, but it is prefered to avoid incompatible external lubricants which can interfer with surface tension. Moreover, plasticizers, such as those typically used and known to one skilled in the art can also be utilized.

Wherever used in this specification, including the Examples, the term "parts" or "parts by weight" means parts by weight per 100 parts by weight of total PVC polymer, unless otherwise stated.

Various fillers and pigments can also be employed in conventional amounts. The amounts and types of additives, fillers and/or pigments required are well known to those skilled in the art.

### Examples

The invention will now be illustrated by examples. The examples are not intended to be limiting of the scope of the present invention. In conjunction with the general and detailed description above, the examples provide further understanding of the present invention and demonstrates some preferred embodiments of the invention.

Flexible Compositions of the subject invention were prepared as follows: PVC and its additives were first heated and mixed in a Henschel mixer. The powdered components, PVC, acrylic processing aid, and silica were first mixed to obtain a homogeneous powder. This was followed by the addition of the liquid tin stabilizer and plasticizer. The entire mixture, was mixed and heated to about 250° F, removed from the Henschel and allowed to cool. The cooled mixture was then added to a Banbury mixer where it was heated and mixed for 2-3 minutes until a temperature of about 330° F was reached. The mixture was then placed on a two-roll mill at 300-320° F and milled for 2 minutes. The mill sheet was then granulated.

Rigid compositions were prepared as described above without the addition of plasticizer. The compositions are presented in table I.

**TABLE I**

| **SAMPLE****¹** **NUMBER** | **1** | **2** | **3** | **4** | **5** | **6** | **7** |
|---|---|---|---|---|---|---|---|
| PVC Pts by wt. | 100 | 100 | 100 | 100 | 100 | 100 | 100 |
| Silica | - | 2.0 | 4.0 | 0.5 | 0.5 | - | 0.5 |
| Impact Modifier | - | - | - | - | 2.0 | 6 | 6 |
| Process Aid | 1 | 1 | 1 | 1 | 1 | 3 | 3 |
| Organotin Stabilizer | 3 | 3 | 3 | 3 | 3 | 1 | 1 |
| Calcium Carbonate (Filler) | - | - | - | - | - | 27 | 27 |
| Lubricants | 2 | 1 | 1 | - | - | 2 | - |
| Plasticizer | 25 | 25 | 25 | 25 | 25 | - | - |

| | | | | | | | |
|---|---|---|---|---|---|---|---|
| 1. Examples 6 and 7 are rigid compositions | | | | | | | |

Compositions 1, 4 and 5 were painted with several types of paints; (A) high gloss exterior latex, (B) flat exterior latex, (C) exterior acrylic enamel, (D) exterior oil based, and (E) exterior water based stain. These were commercial paints available at any paint or hardware store. Both light and dark colors were applied to the substrates.

The ASTM adhesion test D-3359 was employed to determine how well the paint adhered to the substrate. Results are given in TABLE II.

**TABLE II**

| Sample | Paint A | Paint B | Paint C | Paint D | Paint E |
|---|---|---|---|---|---|
| 1 | Fail | Fail | Fail | Fail | Fail |
| 4 | 5b | 5b | 5b | 5b | 5b |
| 5 | 5b | 5b | 5b | 5b | 5b |

As shown above all of the types of paints adhere to the compositions with the silica additive. The control resin had poor adhesion with all of the paints tested.

The surface tension of the materials was measured. The surface tension was determined using standardized test inks obtained from Softal Inc. The results are summarized in table III.

**TABLE III**

| **SAMPLE****¹** | **SURFACE TENSION** in dynes/cm (mN/m) |
|---|---|
| 1 | <36 |
| 2 | 39 |
| 3 | 39 |
| 4 | 44 |
| 5 | 46 |
| 6 | 36 |
| 7 | >56 |

| | |
|---|---|
| 1. Examples 5 and 6 are rigid compositions | |

The above preferred embodiments and examples are given to illustrate the scope and spirit of the present invention. These embodiments and examples will make apparent, to those skilled in the art, other embodiments and examples. These other embodiments and examples are within the contemplation of the present invention. Therefore, the present invention should be limited only by the appended claims.

## Claims

1. A polyvinyl chloride composition having high surface tension comprising polyvinyl chloride resin and a silica wherein the composition is essentially free of low molecular weight lubricants.

2. The composition according to claim 1 wherein the composition will have from about 0.05 part to about 30 parts by weight of silica per 100 parts by weight of polyvinyl chloride resin.

3. The composition according to claim 2 wherein the composition will have from about 0.1 part to about 20 parts by weight of silica per 100 parts by weight of polyvinyl chloride resin.

4. The composition according to claim 3 wherein the composition will have from about 0.25 part to about 10 parts by weight of silica per 100 parts by weight of polyvinyl chloride resin.

5. The composition according to claim 1 wherein the composition will have a surface tension greater than 40 dynes/cm.

6. The composition according to claim 5 wherein the composition will have a surface tension greater than 50 dynes/cm.

7. The composition of Claim 1 wherein the PVC resin is a homopolymer or a copolymer of vinyl chloride and one or more copolymerizable monomers.

8. The composition of Claim 7 wherein the copolymerizable monomers are esters of acrylic acid.

9. The composition according to claim 1 wherein the composition has good adhesion to a coating and the coating is a paint or an adhesive.

10. The composition according to claim 9 wherein the paint is a latex paint.

11. A polymeric article wherein the article is formed from a polymeric composition comprising polyvinyl chloride resin and a silica wherein the composition is essentially free of low molecular weight lubricants.

12. The article of Claim 11 which is selected from the group consisting of automobile components, construction profiles, water vessels, fluid handling equipment, panels for entry and garage doors, siding, capstock, furniture, office partitions, cabinets, heating and air conditioning componentry, ceiling gridwork, tiles, appliance and business equipment housings and consoles, refrigerator and freezer doors and liners, road signs, barriers, traffic cones, bulkhead, fencing and railing systems, cones, sanitary wares, capstock, window coverings, shutters, other trim pieces and molded or extruded siding.

13. A process for the preparation of a polyvinyl chloride composition having high surface tension comprising admixing polyvinyl chloride resin and a silica wherein the composition is essentially free of low molecular weight lubricants.

14. The process according to claim 13 wherein the composition will have from about 0.05 part to about 30 parts by weight of silica per 100 parts by weight of polyvinyl chloride resin.

15. The process according to claim 14 wherein the composition will have from about 0.1 part to about 20 parts by weight of silica per 100 parts by weight of polyvinyl chloride resin.

16. The process according to claim 15 wherein the composition will have from about 0.25 part to about 10 parts by weight of silica per 100 parts by weight of polyvinyl chloride resin.

17. The process of Claim 14 wherein the PVC resin is a homopolymer or a copolymer of vinyl chloride and one or more copolymerizable monomers.

18. The process of Claim 17 wherein the copolymerizable monomers are esters of acrylic acid.
